# EUROPEAN PATENT APPLICATION

(11) **EP 1 286 137 A2**
(43) Date of publication of application: **26.02.2003**
(21) Application number: 02018208.5
(22) Date of filing: 20.08.2002
(51) Int. Cl.: G01C 21/26

(54) **System and computer program for and method of adapting communication navigation**

(30) Priority: 20.08.2001 JP 2001249664
(71) Applicant: Pioneer Corporation, Tokyo-to (JP)
(72) Inventor: Shioda, Takehiko, Pioneer Corporation, Tsurugashima-shi, Saitama-ken (JP)
(74) Representative: Viering, Jentschura & Partner

(57) **Abstract**

A system (10, 20) for operating a communication navigation has a movable body navigation terminal (16) for a user and an administering apparatus (11, 21) for a communication navigation company, which are connected to each other through a communication line (12, 15, 22). The movable body navigation terminal is mounted on a movable body. The administering apparatus provides, to the movable body navigation terminal, plan information which indicates an added, changed or detailed plan in line with a drive plan set at the movable body navigation terminal and which corresponds to an in-progress state of the drive plan based on a driving condition of the movable body detected at the movable body navigation terminal. The administering apparatus collects a predetermined amount of fee in case that the movable body navigation terminal adopts the provided plan information.

## Description

### BACKGROUND OF THE INVENTION

### 1. Field of the Invention

The present invention relates to a system for and a method of operating a communication navigation, and a computer program, which connect through a communication line (i) a user terminal that a user has at home or the like, (ii) a facility terminal that a facility company such as an amusement facility, a restaurant, a hotel, or the like has, and (iii) a movable body navigation terminal that is mounted on a vehicle or the like by the user, which provide service information to the user who is an operator of the movable body, and which charge for the used service.

### 2. Description of the Related Art

Nowadays, navigation systems for helping to drive a vehicle are significantly spread and popularized. These navigation systems are designed to display various map data, current position data, route data to a destination, guidance data and the like on a display device and/or to output as voice or sound a warning message, a guidance message or the like for navigation by a speaker mounted on a vehicle. The current position data are obtained by a GPS (Global Positioning System) apparatus or by a self-contained or built-in positioning apparatus such as a velocity sensor, an acceleration sensor, an angular velocity sensor or the like mounted on a vehicle to obtain position information. Moreover, a communication navigation system, which is being developed now, is equipped with a wireless communication device and is designed to exchange radio messages with an outer information source, to catch and display objective information, or to output it as voice or sound, thereby helping to drive.

As an example of using these navigation systems, there is a system available for a safe drive achieved, by preparing and inputting a drive plan in advance, to inform a driver of a route direction, a view of town along the route, a geophysical feature, a distance to a destination, an arrival time or the like during an actual drive as the occasion demands while the driver confirms the driving condition and checks it with the drive plan.

On the other hand, there is another system which has been recently developed and in which an information provider company provides such a drive plan depending on various conditions such as an object and a destination of driving of each user via the Internet. In this case, such a system that the user pays the Internet access charge to download the drive plan to the user terminal such as a personal computer or the like at home, further stores this information into a memory card or the like, and imports it to an on-vehicle navigation system has been developed.

However, if we drive according to the drive plan obtained via the Internet or the navigation system as described above, things don't always turn out as planned; for example, detouring because of a traffic regulation, a traffic congestion or jam before actually arriving at a destination, or the like. Because of this, we sometimes arrive at the destination behind schedule and things don't proceed according to the plan; for example, miss joining a local event which is incorporated into one portion of the drive plan or which is planned initially, or the like. Usually, it is general not to have detailed information of other events performed at the destination but to have information associated with what has been planned while driving; it is difficult to obtain the event information appropriate for the arrival time and to modify the plan. In other words, there is such a problem that an existing navigation system or a personal computer or the like has difficulty in making drive plans while taking account of factors, such as a scheduled arrival time or the like, which change depending on an actual driving condition of a vehicle.

On the other hand, according to the information provider companies which provide the drive plans via the Internet as described above, it is difficult to charge to the users or the facility companies such as a hotel and the like, the fee which match the preparation of the drive plans. Namely, in the ordinary circumstance that the drive plans can be downloaded with a personal computer at home, a user generally pays the fee only as much as the Internet access charge, which is a relatively low price. Therefore, it is predicted that it will become difficult even for communication navigation companies, which are predicted to appear later, to perform a business of providing the drive plans on the basis of marketing and sales. Conversely, an existing service system for providing the drive plans cannot provide timely the information in a specific circumstance, which increases an added value of the information for a user, so that there is such a problem that the companies have difficulties in charging the fees to the facility companies and the users satisfactorily.

### SUMMARY OF THE INVENTION

It is therefore an object of the present invention to provide a system for and a method of operating a communication navigation, and a computer program, which can provide information indicating various added, changed or detailed plans accompanied with or included in the drive plan such as information on variety of events performed at a destination, as the occasion demands, depending on an in-progress state of the drive plan, and which enable the communication navigation companies to charge the fees to the facility companies or the users properly by providing the users with such information that has a high added-value at an appropriate time especially under circumstances with changes or delays of the drive plan.

The above object of the present invention can be achieved by a system for operating a communication navigation comprising a movable body navigation terminal for a user and an administering apparatus for a communication navigation company, which are connected to each other through a communication line, the movable body navigation terminal being mounted on a movable body, wherein the administering apparatus provides, to the movable body navigation terminal, plan information which indicates an added, changed or detailed plan in line with a drive plan set at the movable body navigation terminal and which corresponds to an in-progress state of the drive plan based on a driving condition of the movable body detected at the movable body navigation terminal, and the administering apparatus collects a predetermined amount of fee in case that the movable body navigation terminal adopts the provided plan information.

According to the system for operating the communication navigation of the present invention, a user's drive plan is set at the movable body navigation terminal. For example, the user usually plans before the date of driving by accessing to the administering apparatus through the Internet from a personal computer as a user terminal or an information terminal different from the movable body navigation terminal, inputting a condition of the plan, and searching for information satisfying the plan. The term "condition" here includes, for example, a destination, a departure time, actions at the destination, and so on. A destination and a traveling route which meet this condition is presented from a database of the administering apparatus and choosing what the user desires among them completes the plan. Incidentally, this kind of drive plan may be prepared through a wireless line and a portable terminal.

Then, while in progress of the actual drive plan, i.e. while driving of the movable body, the driving condition of the movable body such as a current position, delay from a scheduled time caused by a side trip or a traffic congestion, straying from a scheduled route, or the like is detected at the movable body navigation terminal. For example, among from the plan information indicating plans of various services registered by arbitrary facility companies set in advance in a database or the like, the system provides plan information, which indicates an added, changed or detailed plan (e.g., an additional service) in line with the user's drive plan set at the movable body navigation terminal and which depends on the in-progress state of the drive plan based on the driving condition of the movable body detected at the movable body navigation terminal, to the movable body navigation terminal from the administering apparatus. For example, in the case that it seems impossible to carry out an initially-scheduled plan because of a delay of arriving at the destination caused by a traffic congestion of the like, in the case that the user is likely to arrive at the destination earlier because he or she omits to go to an intermediate destination due to a weather condition, or in the case that the user approaches to the-destination without making any definite plan of what to do there, it provides the plan information, which depends on the in-progress state such as a delay from a scheduled arrival time based on the current position or the like. This makes it possible for the user to obtain desired services without waiting after the arrival, to reserve for a participation in an event which starts immediately after the arrival, or to act according to a plan changed without any time loss despite of the initially-scheduled arrival time to the destination. On the other hand, this makes it possible for the facility company to provide a service without keeping the user waiting and further to take advantage of service resources or human resources without waste according to a time schedule.

Then, in the case that the movable body navigation terminal adopts the plan information provided above, the communication navigation company, which owes the administering apparatus, collects a predetermined amount of fee from the facility company and/or the user.

According to the system for operating the communication navigation of the present invention, as described above, it becomes possible to make the added, changed or detailed plan in consideration of even the in-progress state of the drive plan such as the scheduled arrival time or the like, which is extremely convenient for the user.

Moreover, even if the user drives in line with the drive plan, it frequently happens that things don't turn out as planned. In view of the reality that most of the time the user doesn't have the detailed information or the like of other events to be held at the destination except information associated with what has been planned in advance while driving, the information indicating the added, changed or detailed plan, which is provided through the movable body navigation terminal as described above, becomes high value-added information for the user who is driving the movable body. Therefore, it becomes possible for the company to properly charge the facility company and/or the user by providing information at an appropriate time under the circumstance that added-value becomes high for the user.

Furthermore, user's orders can be also informed to the facility company immediately, and the charge and fee to the facility company can be electronically paid, so that the user doesn't feel bothered and can enjoy driving.

In one aspect of a system for operating communication navigation of the present invention, a facility terminal installed at a facility associated with the added, changed or detailed plan is further connected to the administering apparatus through the communication line, and the facility terminal transmits the plan information to the administering apparatus through the communication line in advance.

According to this aspect, the facility terminal installed at the facility, such as amusement facility, a restaurant, a hotel, or the like, associated with the added, changed or detailed plan has transmitted various types of plan information to the administering apparatus through the communication line in advance. Therefore, the facility company can provide the various types of plan information for the administering apparatus relatively easily and it becomes easy to change and update their contents. Then, by having accumulated these various plan information in advance, the administering apparatus becomes able to provide the information indicating the added, changed or detailed plan in line with the drive plan of the user from among the accumulated plan information immediately after the user requires.

In another aspect of a system for operating communication navigation of the present invention, a facility terminal installed at a facility associated with the added, changed or detailed plan is further connected to the administering apparatus through the communication line, and the administering apparatus transmits a scheduled arrival time of the movable body arriving at a destination of the drive plan, which is based on a current time and a current position of the movable body detected at the movable body navigation terminal, to the facility terminal through the communication line.

According to this aspect, a facility terminal installed at a facility, such as amusement facility, a restaurant, a hotel, or the like, associated with the added, changed or detailed plan receives the scheduled arrival time, which is based on a current position and a current time of the movable body. Consequently, the facility can prepare in advance, for example, it can meet the user, who becomes a hotel guest, at the door or the like so that the added, changed or detailed plan can be performed without any problem or delay.

In another aspect of a system for operating communication navigation of the present invention, the administering apparatus is provided with an arrival time calculation device for calculating an arrival time of the movable body arriving at a destination of the drive plan on the basis of (i) a current time and a current position of the movable body detected at the navigation terminal and (ii) the drive plan.

According to this aspect, because the arrival time calculation device calculates the arrival time of the movable body arriving at the destination on the side of the administering apparatus, there is no need to perform this kind of heavy processing on the side of the movable body navigation terminal. Moreover, it can provide the arrival time calculated on the side of the administering apparatus, to the facility terminal and/or the movable body navigation terminal immediately.

In another aspect of a system for operating communication navigation of the present invention, an information terminal, which is different from the movable body navigation terminal, is further connected to the administering apparatus through the communication line, and the administering apparatus prepares the drive plan corresponding to a driving condition transmitted through the communication line from the information terminal.

According to this aspect, a driving condition is transmitted to the administering apparatus from the information terminal such as a user terminal or the like and the drive plan is prepared in advance with the administering apparatus. Therefore, the user becomes able to obtain his or her desired drive plan before starting to drive. Moreover, the added, changed or detailed plan is provided, during an actual driving, depending on an execution condition of the drive plan, so that it is enough only to obtain the drive plan roughly when operating the information terminal, which is convenient in practice.

In this aspect, the system may be designed such that the administering apparatus transmits the plan information indicating the drive plan to the movable body navigation terminal through the communication line, and the plan information received through the communication line is set at the movable body navigation terminal.

By constituting in this manner, it is possible to set the plan information indicating the drive plan generated by the administering apparatus, at the movable body navigation terminal after the transmission / reception through the communication line. Then, it is possible to provide the added, changed or detailed plan in line with the drive plan set in this manner during an actual driving.

Incidentally, after the administering apparatus firstly transmits the plan information indicative of the drive plan to the information terminal such as a user terminal or the like and it is stored at the information terminal in a medium which is readable at the movable body navigation terminal, the user can bring the medium into a movable body.

In another aspect of a system for operating communication navigation of the present invention, the administering apparatus provides the plan information corresponding to a scheduled arrival time of the movable body arriving at a destination of the drive plan, which is based on a current time and a current position of the movable body detected at the movable body navigation terminal, as the in-progress state of the drive plan.

According to this aspect, the administering apparatus provides the plan information corresponding to a scheduled arrival time of the movable body, which is based on a current time obtained by a clock disposed at the administering apparatus or the movable body navigation terminal and a current position of the movable body detected at the movable body navigation terminal by an self-contained or built-in positioning apparatus, a GPS apparatus, or the like. Consequently, the user becomes able to execute a timely plan when arriving at the destination. For example, it becomes possible that the user reserves a show which will start immediately after he or she arrives, that a meal is ready when he or she arrives, that people at an accommodation facility meet the user at the door when he or she arrives, and so on.

In another aspect of a system for operating communication navigation of the present invention, the administering apparatus is provided with: a database for storing a plurality of plan information; and a searching device for searching for the database for the plan information corresponding to the in-progress state of the drive plan.

According to this aspect, various types of plan information provided as paper data or by communication using the facility terminal is stored in the database of the administering apparatus in advance. Then, while the user is executing the drive plan, it is possible to search for the plan information corresponding to the in-progress state of the drive plan immediately, so that it is possible to provide this searched plan information, to the movable body navigation terminal immediately.

In another aspect of a system for operating communication navigation of the present invention, the movable body navigation terminal is provided with: a storing device for storing the plan information indicating the added, changed or detailed plan as well as the plan information indicating the drive plan received from the administering apparatus; an output device for outputting the stored plan information in a predetermined format; and an input device through which adoption information indicative of adopting the outputted plan information can be inputted.

According to this aspect, the plan information indicating the added, changed or detailed plan as well as the plan information indicating the drive plan received from the administering apparatus are stored in the storing device such as a RAM, a hard disk device, or the like at the movable body navigation terminal. Then, the output device such as an audio output device, a display device, or the like outputs the stored plan information stored in this manner in a predetermined format. Then, the user, in correspondence to this, inputs the adoption information indicative of adopting the outputted plan information. In response to this, the administering apparatus can charge a predetermined fee.

In another aspect of a system for operating communication navigation of the present invention, the administering apparatus is provided with a charging device for performing a payment process corresponding to a collection of the predetermined amount of fee by withdrawing a predetermined amount of money from the amount of money which has been paid to the administering apparatus by a user in advance.

According to this aspect, the administering apparatus electronically performs the payment process as a payment facility, which doesn't bother a driver.

In another aspect of a system for operating communication navigation of the present invention, the administering apparatus is connected to a bank terminal through the communication line and performs a payment process corresponding to a collection of the predetermined amount of fee by withdrawing a predetermined amount of money from a bank account of the user at the bank terminal.

According to this aspect, the administering apparatus electronically performs the payment process by using the bank terminal, which doesn't bother a driver. Incidentally, if there is other appropriate payment process, it may be obviously used.

The above object of the present invention can be achieved by a first computer program, which may be stored in a program storage device readable by a computer, or which may be carried as a computer data signal by a carrier wave. The computer program of instructions causes a computer to function as an administering apparatus in the above-described system for operating the communication navigation of the present invention (including its various aspects).

According to the first computer program of the present invention, the above described navigation system of the present invention can be relatively easily realized as a computer reads and executes the program of instructions from the program storage device such as a CD-ROM (Compact Disc - Read Only Memory), a DVD-ROM (DVD Read Only Memory), a hard disk, a floppy disk or the like, or as it executes the program of instructions after downloading the program through communication device. More concretely, the administering apparatus for the communication navigation company in the above-described system for operating the communication navigation of the present invention can be relatively easily realized.

The above object of the present invention can be achieved by a second computer program, which may be stored in a program storage device readable by a computer, or which may be carried as a computer data signal by a carrier wave. The computer program of instructions causes a computer to function as a movable body navigation terminal in the above-described system for operating the communication navigation of the present invention (including its various aspects).

According to the second computer program of the present invention, the above described navigation system of the present invention can be relatively easily realized as a computer reads and executes the program of instructions from the program storage device such as a CD-ROM, a DVD-ROM, a hard disk, a floppy disk or the like, or as it executes the program of instructions after downloading the program through communication device. More concretely, the movable body navigation terminal in the above-described system for operating the communication navigation of the present invention can be relatively easily realized.

The above object of the present invention can be achieved by a method of operating a communication navigation in a system for operating the communication navigation comprising a movable body navigation terminal for a user and an administering apparatus for a communication navigation company, which are connected to each other through a communication line, the movable body navigation terminal being mounted on a movable body, the method comprising the processes of: providing, from the administrating apparatus to the movable body navigation terminal, plan information which indicates an added, changed or detailed plan in line with a drive plan set at the movable body navigation terminal and which corresponds to an in-progress state of the drive plan based on a driving condition of the movable body detected at the movable body navigation terminal, and collecting a predetermined amount of fee in case that the movable body navigation terminal adopts the provided plan information.

According to this aspect of the present invention, while in progress of the actual drive plan, the driving condition of the movable body such as a current position or the like is detected at the movable body navigation terminal. Then, the system provides the plan information, which indicates an added, changed or detailed plan (e.g. an additional service) in line with the user's drive plan and which depends on the in-progress state (e.g. a scheduled arrival time) of the drive plan based on the driving condition of the movable body as detected above, to the movable body navigation terminal from the administering apparatus. Then, in the case that the movable body navigation terminal adopts the provided plan information, the communication navigation company which owes the administering apparatus collects a predetermined amount of fee from the facility company and/or the user.

Therefore, according to the method of operating the communication navigation of the present invention, it becomes possible to make the added, changed or detailed plan in consideration of even a factor which changes depending on the actual driving condition of the movable body such as the scheduled arrival time or the like, which is extremely convenient for the user. Moreover, it becomes possible for the company to properly charge the facility company and/or the user by providing the information at an appropriate time under the circumstance that added-value becomes high for the user. Furthermore, user's orders can be also informed to the facility company immediately, and the charge and fee to the facility company can be electronically paid, so that the user doesn't feel bothered and can enjoy driving.

In one aspect of a method of operating communication navigation of the present invention, a facility terminal installed at a facility associated with the added, changed or detailed plan is further connected to the administering apparatus through the communication line, and the method further comprises the process of transmitting a scheduled arrival time of the movable body arriving at a destination of the drive plan, which is based on a current time and a current position of the movable body detected at the movable body navigation terminal, from the administrating apparatus to the facility terminal through the communication line.

According to this aspect, the facility terminal installed at the facility associated with the added, changed or detailed plan receives the scheduled arrival time, which is based on a current position and a current time of the movable body. Consequently, the facility can prepare in advance, for example, it can meet the user, who becomes a hotel guest, at the door or the like so that the added, changed or detailed plan can be performed without any problem or delay.

In another aspect of a method of operating communication navigation of the present invention, an information terminal, which is different from the movable body navigation terminal, is further connected to the administering apparatus through the communication line, and the method further comprises a process of preparing the drive plan corresponding to a driving condition transmitted through the communication line from the information terminal, by the administering apparatus.

According to this aspect, the driving condition is transmitted to the administering apparatus from the information terminal such as a user terminal or the like and the drive plan is prepared in advance with the administering apparatus. Therefore, the user becomes able to obtain his or her desired drive plan before starting to drive.

In another aspect of a method of operating communication navigation of the present invention, the method is further provided with a process of performing a payment process corresponding to a collection of the predetermined amount of fee by withdrawing a predetermined amount of money from the amount of money which has been paid to the administering apparatus by the user in advance, by the administering apparatus.

According to this aspect, the administering apparatus electronically performs the payment process as a payment facility, which doesn't bother a driver.

In another aspect of a method of operating communication navigation of the present invention, the administering apparatus is connected to a bank terminal through the communication line, and the method further comprises a process of performing a payment process corresponding to a collection of the predetermined amount of fee by withdrawing a predetermined amount of money from a bank account of the user at the bank terminal.

According to this aspect, the administering apparatus electronically performs the payment process by using the bank terminal, which doesn't bother a driver. Incidentally, if there is other appropriate payment process, it may be obviously used.

Incidentally, as for the above-described system for operating the communication navigation, it may be designed not to collect the predetermined amount of fee in the case that the movable body navigation terminal adopts the plan information that the administering apparatus provides. Even in this construction, its various aspects are allowed in the same manner as various aspects associated with the system for operating the communication navigation of the present invention as described above. Alternatively, as for the above-described method of operating the communication navigation, it may be designed not to perform a process of collecting the predetermined amount of fee in the case that the movable body navigation terminal adopts the plan information that the administering apparatus provides. Even in this construction, its various aspects are allowed in the same manner as various aspects associated with the method of operating the communication navigation of the present invention as described above. Even if they are designed not to collect the predetermined amount of fee as described above, the communication navigation system which is extremely convenient for the user is designed in a movable body.

Moreover, as for the system and the method of operating the communication navigation of the present invention as designed above, even if they are designed not to collect the predetermined amount of fee in the case that the movable body navigation terminal adopts the plan information, it becomes possible to prepare the added, changed or detailed plan of the drive plan in view of even the in-progress state of the drive plan such as a scheduled arrival time etc. as described above, which is extremely convenient for the user.

Namely, on one hand, the above object of the present invention can be also achieved by another system for operating a communication navigation comprising a movable body navigation terminal for a user and an administering apparatus for a communication navigation company, which are connected to each other through a communication line, the movable body navigation terminal being mounted on a movable body, wherein the administering apparatus provides, to the movable body navigation terminal, plan information which indicates an added, changed or detailed plan in line with a drive plan set at the movable body navigation terminal and which corresponds to an in-progress state of the drive plan based on a driving condition of the movable body detected at the movable body navigation terminal.

According to another system of the present invention, it is still extremely convenient for the user regardless of the payment of the fee.

In one aspect of another system, the administering apparatus provides the plan information corresponding to a scheduled arrival time of the movable body arriving at a destination of the drive plan, which is based on a current time and a current position of the movable body detected at the movable body navigation terminal, as the in-progress state of the drive plan.

According to this aspect, it is still convenient for the user and the facility company etc., regardless of the payment of the fee.

Namely on the other hand, the above object of the present invention can be also achieved by another method of operating a communication navigation in a system for operating the communication navigation comprising a movable body navigation terminal for a user and an administering apparatus for a communication navigation company, which are connected to each other through a communication line, the movable body navigation terminal being mounted on a movable body, the method comprising the process of: providing, from the administrating apparatus to the movable body navigation terminal, plan information which indicates an added, changed or detailed plan in line with a drive plan set at the movable body navigation terminal and which corresponds to an in-progress state of the drive plan based on a driving condition of the movable body detected at the movable body navigation terminal.

According to another method of the present invention, it is still extremely convenient for the user regardless of the payment of the fee.

In one aspect of this another method, the administering apparatus provides the plan information corresponding to a scheduled arrival time of the movable body arriving at a destination of the drive plan, which is based on a current time and a current position of the movable body detected at the movable body navigation terminal, as the in-progress state of the drive plan.

According to this aspect, it is still convenient for the user and the facility company etc., regardless of the payment of the fee.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a block-diagram showing the whole structure of a system for operating a communication navigation in a first embodiment of the present invention;
FIG. 2 is a block diagram showing a structure of an administering apparatus for the communication navigation, which is a constitutional element of the first embodiment;
FIG. 3 is a block diagram showing a structure of a navigation apparatus mounted on a movable body;
FIG. 4 is a schematic diagram showing one example of a presentation form of a service plan presented as an option;
FIG. 5 is a sequence chart showing the operation of the first embodiment with time;
FIG. 6 is a block diagram showing the whole structure of a system for operating a communication navigation in a second embodiment of the present invention;
FIG. 7 is a block diagram showing a structure of an administering apparatus for the communication navigation, which is a constitutional element of the second embodiment; and
FIG. 8 is a sequence chart showing the operation of the second embodiment with time.

### DETAILED DESCRIPTION OF THE PREFERRED EMBODIMENTS

Referring to the accompanying drawings, embodiments of the present invention will be now explained. Each embodiment, which will be described below, is intended to apply the system for operating a communication navigation of the present invention to an operating system associated with an on-vehicle navigation system.

### (I) First Embodiment

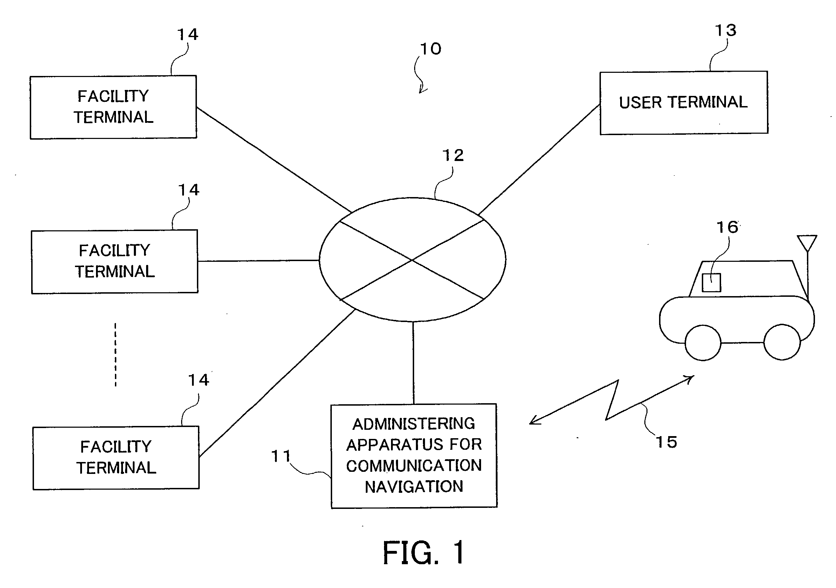

Firstly, the system for operating a communication navigation of the first embodiment will be explained with reference to FIG. 1 to FIG. 5.

As shown in FIG. 1, a system 10 for operating a communication navigation in the first embodiment is constructed by: an administering apparatus 11 for communication navigation; a user terminal 13 and facility terminals 14 connected to the administering apparatus 11 through an Internet network 12; and a navigation terminal 16 mounted on a vehicle as one example of a movable body, which is connected to the administering apparatus 11 through a wireless line 15.

The administering apparatus 11 for the communication navigation is, as will be described in detail later, intended to control the operation and the administration of the whole system. The operation, the administration, the installation or the like are performed by a company that operates the system 10 (hereunder, the company is merely referred to as a "navigation company"). The navigation company operates the administering apparatus 11 for the communication navigation, so as to provide a service for the user, who uses a movable body, and facility companies, thereby deriving its income.

The Internet network 12 is intended to connect the administering apparatus 11 for the communication navigation with the user terminal 13 and the facility terminals 14. It preferably uses a predetermined Internet line, which is generally provided.

The user terminal 13 is a terminal of a personal computer or the like that a user installs at home or the like and is connected to the administering apparatus 11 for the communication navigation through the Internet network 12. The user accesses the administering apparatus 11 for the communication navigation from his or her home to obtain information on a drive plan and/or to register his or her set drive plan. Incidentally, when preparing the drive plan, it is possible to pay a navigation company a predetermined amount of money or to pay a constant amount of money during a certain period, thereby using the system freely in the meantime.

The facility terminals 14 are terminals installed at facilities such as a hotel and the like and are connected to the administering apparatus 11 for the communication navigation through the Internet network 12 to register various pieces of information on the facilities with respect to the users. Moreover, communications with the navigation company are performed through this terminal.

The navigation terminal 16 is a navigation apparatus mounted on the movable body that the user uses and is connected to the administering apparatus 11 for the communication navigation through the wireless line 15. For example, it transmits a travel situation of the movable body such as a current position or the like and receives various pieces of information from the navigation company. Moreover, it can receive the provision of pictures and music. The navigation terminal 16 is an important element which constitutes the present invention and its structure will be explained in detail below.

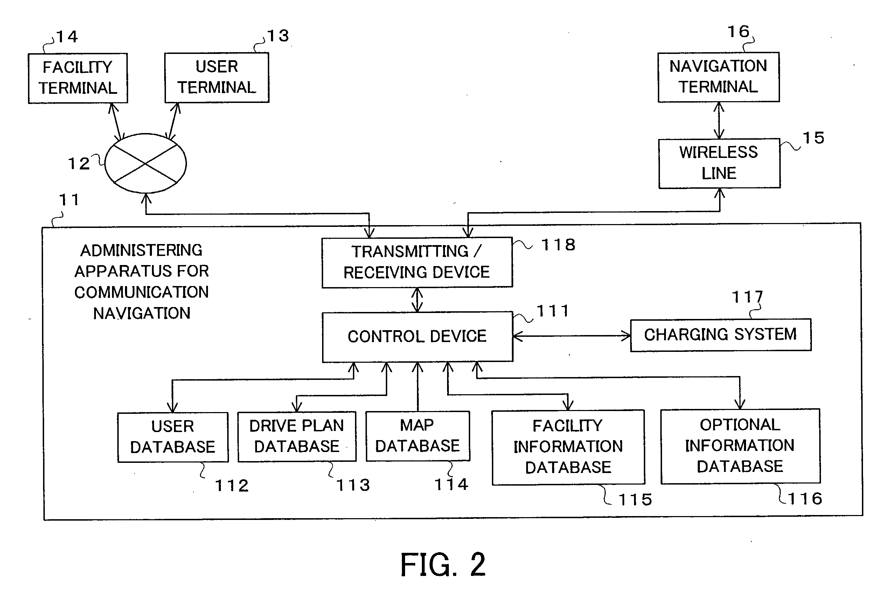

Next, the administering apparatus 11 for the communication navigation will be explained with reference to FIG. 2.

As shown in FIG. 2, the administering apparatus 11 for the communication navigation is constructed by a control device 111 for controlling the system, a user database 112, a drive plan database 113, a map database 114, a facility information database 115, an optional information database 116, a charging system 117, and a transmitting / receiving device 118. Obviously, necessary structures may be further added to this basis structure.

The control device 111 is intended to integrate and control each constitutional element of the administering apparatus 11 for the communication navigation and to control the system operation of the present invention, which is communicating with the facility companies and the users through the transmitting / receiving device 118 to perform its control, for example. The computer system plays its core part.

The user database 112 has a recordable and reproduceable record medium such as a hard disk or the like. Information on the users who use the system for operating the communication navigation is recorded on it as required and what is no longer required is deleted from it in each case. For example, if the user inputs the drive plan from the user terminal 13, it records information onto this. As the information, there are a user ID, a drive date, a destination, a driving route, an activity plan at the destination, or the like. Moreover, it records a driving condition of the day with time and this is used as information for judgment of the driving condition of the vehicle.

The drive plan database 113 is intended to assist in preparation of the drive plan when the user inputs it from the user terminal 113. Event information, facilities, fees to use them, traffic routes and the like in various locations are stored in the drive plan database 113. Searching is performed according to the conditions that the user inputs on the basis of these stored information, and some information identified by the user's conditions is provided. The user chooses what meets his or her desire among them to prepare the drive plan. The drive plan as prepared above is recorded into the above-described user database 112. The process of preparation of the plan, i.e. a proposal from the drive plan database 113 can be also recorded together, and it can be used as supporting information later.

The map database 114 is intended to store map information for navigation. It is presented when the user prepares the drive plan and is used for decision of the driving route. The position of the destination presented in the process of preparation of the plan may be clearly marked on the map information to present it to the user. Moreover, while driving, it is used for presentation of a map of a predetermined area with the current position as the center after obtaining information on the current driving position. Furthermore, on the side of the control device 111, it is used as data to calculate a destination arrival time from a vehicle speed and a distance between the destination and the current position.

The facility information database 115 is intended to store guidance information of facilities in various locations. General information on the facilities presented from the facility companies is recorded in it. When recording this information, or when changing it, a predetermined amount of charge may be paid from the facility company to the navigation company, or a constant amount of charge may be paid during a certain period to update them freely in the meantime.

The optional information database 116 stores detailed service information in addition to general service, which is presented by the facility company. This service information includes service information that is often updated depending on factors of season and time, such as a specially-planned performance, yearly occasion information, or event information according to season, or information according to time, and so on. Most of the information is suddenly planned or finished, so that such a system that the facility company can make direct access to the optional information database 116 from the facility terminal 14 to freely update its contents is preferable.

The charging system 117 is such a system that the users and the facility companies pay the fees to use with respect to the navigation company, which operates the system 10 for operating the communication navigation. The user, for example, deposits a certain amount of money into his or her account in the charging system 117 in a prepaid manner and the navigation company withdraws money depending on the use. This service is available as long as there is the balance on the account. Moreover, the facility company also opens an account in the charging system 117 and deposits a certain amount of money into it, while the navigation company withdraws the fees to use in the same manner. Furthermore, if the user reserves a service from the facility company, he or she transfers the fees to use from his or her account to the facility company's one to make a payment of the fees.

The transmitting / receiving device 118 sends transmission information generated at the control device 111 to the user terminal 13, the facility terminal 14, or the navigation terminal 16. At the same time, it receives information sent from the user terminal 13, the facility terminal 14, or the navigation terminal 16 and transmits it to the control device 111. The transmission and reception of the transmitting / receiving device 118 to and from the user terminal 13 and the facility terminal 14 are performed through the Internet network 12, and those to and from the navigation terminal 16 are performed through the wireless line 15.

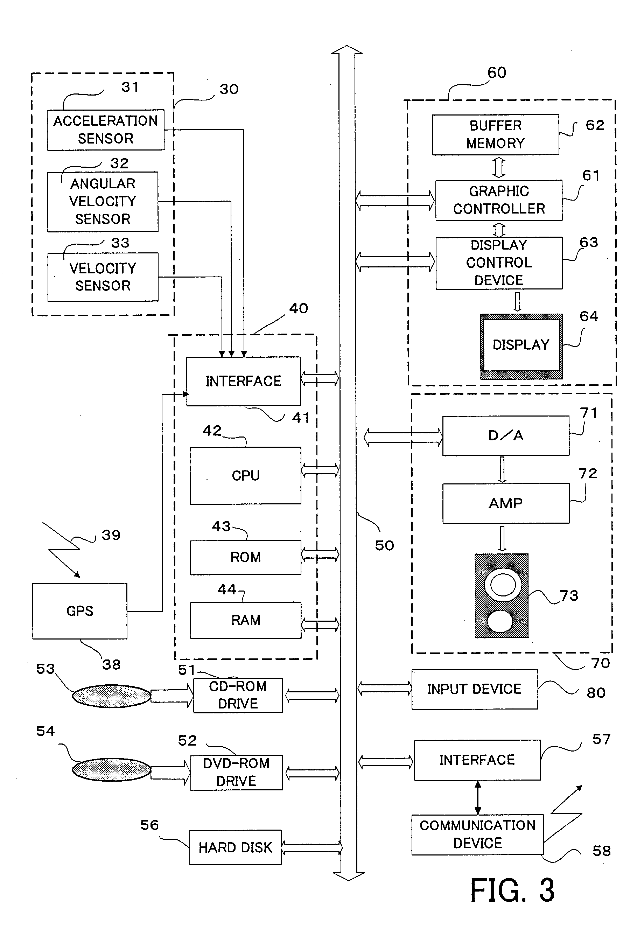

Next, the navigation terminal 16 constituting the system for operating the communication navigation of the present invention will be explained with reference to FIG. 3. The navigation terminal 16 has such a communication function that can exchange radio messages with the administering apparatus 11 for the communication navigation to exchange information when the user drives the vehicle according to the drive plan in addition to a typical navigation function. The navigation terminal 16 is an important constitutional element in this system.

In FIG. 3, the navigation terminal 16 is provided with a self-contained positioning apparatus 30, a GPS receiver 38, a system controller 40, a CD-ROM drive 51, a DVD-ROM drive 52, a hard disk unit 56, an interface 57 for communication, a communication device 58, a display unit 60, an audio output unit 70, and an input device 80.

The self-contained positioning apparatus 30 is constructed to include an acceleration sensor 31, an angular velocity sensor 32, and a velocity sensor 33. The acceleration sensor 31, which is constructed by a piezoelectric element, for example, detects an acceleration of a vehicle and outputs acceleration data. The angular velocity sensor 32, which is constructed by a vibration gyro, for example, detects an angular velocity of a vehicle when the vehicle changes its moving direction and outputs angular velocity data and relative azimuth data. The velocity sensor 33 detects the rotation of a vehicle shaft mechanically, magnetically, or optically and is constructed by a vehicle speed sensor, which generates a vehicle speed pulse as a pulse signal at every rotation for a predetermined angle around the vehicle shaft.

The GPS receiver 38 is intended to be used for detection of an absolute position of the vehicle from information about latitude, longitude, or the like and it is a part to receive a radio wave 39, which carries down link data including data for positioning from a plurality of satellites. It is used to learn a current position of the vehicle, as is the case with the self-contained positioning apparatus 30.

The system controller 40 includes an interface 41, a CPU (Central Processing Unit) 42, a ROM (Read Only Memory) 43 and a RAM (Random Access Memory) 44 and is designed to control the whole system.

The interface 41 performs an interface operation with the acceleration sensor 31, the angular velocity sensor 32, the velocity sensor 33, and the GPS receiver 38. From them respectively, it inputs into the system controller 40 the vehicle speed data, the acceleration data, the angular velocity data, the relative azimuth data, GPS measurement data, absolute azimuth data, image data of surroundings etc.

The CPU 42 has such a function that judges information to be presented to the driver on the basis of the inputted various data, prepares the information, and presents the information, as well as controlling the whole system controller 40. However, depending on the structure of the apparatus, it is also possible to install a CPU for exclusively controlling assist information of this drive.

The ROM 43 has a not-illustrated non-volatile memory where a control program etc. for controlling the system controller 40 is stored. The RAM 44 readably stores various types of data such as route data, which are set in advance by the user through the input device 80, and supplies a working area to the CPU 42.

The system controller 40, the CD-ROM drive 51, the DVD-ROM drive 52, the hard disk unit 56, the interface 57 for communication, the display unit 60, the audio output unit 70, and the input device 80 are mutually connected through a bus line 50.

The CD-ROM drive 51 and the DVD-ROM drive 52 read a control program corresponding to each embodiment and various types of data such as road data etc. including the presence or the absence of the number of traffic lanes, road width, overtaking lanes and the like from a CD-ROM 53 and a DVD-ROM 54 respectively and then output them under the control of the system controller 40.

Moreover, under the control of the system controller 40, the CD-ROM drive 51 and the DVD-ROM drive 52 may have such a function that reads out video data and audio data as contents information from the CD-ROM 53 and the DVD-ROM 54, respectively.

Incidentally, it is possible to dispose either one of the CD-ROM drive 51 and the DVD-ROM drive 52, and it is also possible to dispose a CD and DVD compatible drive.

The hard disk unit 56 regularly or occasionally stores map data, which are read from the CD-ROM drive 51 or the DVD-ROM drive 52 and which corresponds to position information of the vehicle in motion measured by the GPS receiver 38 etc. Alternatively, it stores the audio data and the video data, which are read from the CD-ROM drive 51 or the DVD-ROM drive 52, as the contents information. This makes it possible to read out and output to play the contents stored in the CD-ROM 53 or the DVD-ROM 54 while reading out the map information stored in the hard disk unit 56. Alternatively, this makes it possible to read out the map information stored in the CD-ROM 53 or the DVD-ROM 54 while reading and outputting to play the contents information stored in the hard disk unit 56.

The communication device 58 is constructed by a cellar phone, for example, and is equipped with such a function that can download the audio data, the video data, the map data, or the like, or predetermined types of data regarding those data through the interface 57 for communication, which constitutes a modem or the like.

The display unit 60 displays the above-described various types of display data under the control of the system controller 40. The display unit 60 is provided with: a graphic controller 61, which controls the whole display unit 60 on the basis of control data transmitted from the CPU 42 through the bus line 50; a buffer memory 62, which is constructed by a memory such as a VRAM (Video RAM) etc. and which temporarily memorizes immediately displayable image information; a display control device 63, which controls of display of a display 64 such as a compact LCD (Liquid Crystal Device), an EL (Electro-Luminescence) display, a CRT (Cathode Ray Tube), or the like on the basis of image data outputted from the graphic controller 61; and the display 64. The display 64 is constructed by a liquid crystal display device etc., on the order of 5 to 10 inches in diagonal length for example and is installed around a front panel inside the vehicle. The assist information by an image to the driver, which is judged and prepared at the CPU 42, is displayed on the display 64.

The audio output unit 70 is provided with: a D/A (Digital to Analog) converter 71, which performs a D/A conversion of the sound digital data transmitted through the bus line 50 from the CD-ROM drive 51, the DVD-ROM 52, or the RAM 44 etc., under the control of the system controller 40; an amplifier (AMP) 72, which amplifies a sound analog signal outputted from the D/A converter 71; and a speaker 73, which converts the amplified sound analog signal to voice or sound and which outputs it into the vehicle. The assist information by a sound or voice to the driver, which is judged and prepared at the CPU 42, is outputted from this speaker 73.

The input device 80 is provided with a key, a switch, a button, a remote controller, an audio input device, or the like, to input various types of commands and data. The driver inputs instructions to obtain objective information, to choose and judge the information, to transmit the information, or the like by operating the input device 80. The input device 80 is preferably installed in the vicinity of the display 64 mounted on the vehicle in view of convenience of operation.

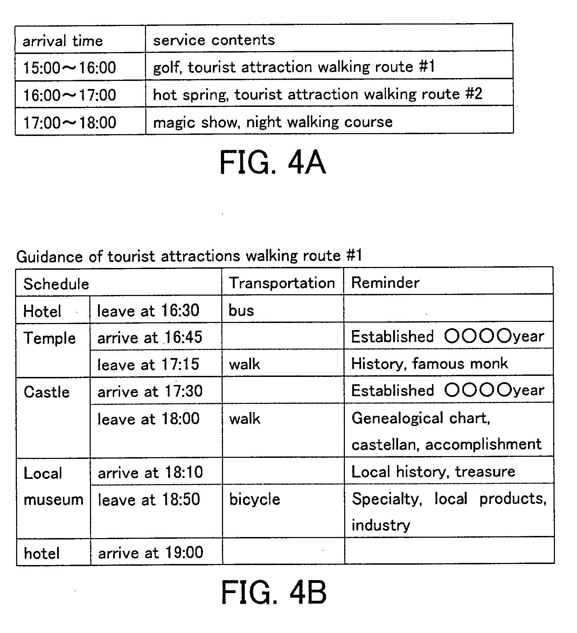

Next, one example of optional information stored in the optional information database 116, which is a constitutional element of the administering apparatus 11 for the communication navigation, will be explained with reference to FIG. 4. The example below displays a predicted time of arriving at a destination and a service menu appropriate to an arrival time, both of which will be presented to the driver. They are sent from the transmitting / receiving device 118 of the administering apparatus 11 for the communication navigation to the above-described navigation terminal 16 through the wireless line 15. The navigation terminal 16 receives them at the communication device 58 and allows the display 64 to display them. Obviously, the presentation form of the service menu is not limited to this and may be displayed in a preferable form according to the contents.

The arrival time can be predicted from: the drive plan, which is initially planed and stored in the user database 112; a vehicle speed and a current position of the vehicle, which are measured at and sent from the navigation terminal 16; and a distance between the destination and the current position, which is known from the map database 114.

FIG. 4A is a table of the service menu appropriate to the arrival time of the vehicle. This table presents that if the arrival time is, for example, 15:00 to 16:00, there are "golf and tourist attraction walking route #1" before the sunset, if 16:00 to 17:00, "hot spring and tourist attraction walking route #2", and if 17:00 to 18:00, "magic show and night walking course".

FIG. 4B is a table informing on the contents of each service menu. It is presented to the user if the user chooses the arrival of 15:00 to 16:00 with the tourist attraction walking route #1 and requires the provision of more complete information, for example. FIG. 4B shows the contents of the tourist attraction walking route #1, which presents leaving the hotel by bus at 16:30 and arriving at the temple at 16:45. There is 30 minutes for a tour of the temple until 17:15 and it shows what to look at there. Then, it presents leaving the temple at 17:15 on foot and arriving at the castle at 17:30. There is 30 minutes for a tour of the castle until 18:00, and then move to the local museum on foot. In this manner, the schedule until coming back to the hotel is presented in detail. The service charge (not shown in this table) is also presented at the same time. Other service menus are also shown in the same manner.

The user becomes able to choose his or her schedule from among the optional service menu as presented above after taking their favorites and the arrival time at the destination into account.

Data processing in the first embodiment, as designed above, and the second embodiment, which will be described below, is intended to be executed mainly at the control device 111 shown in FIG. 2 and the CPU 42 shown in FIG. 3. More concretely, in addition to a computer program for controlling a basic operation in a navigation system such as display of a route, a current position, a map, or the like, a computer program associated with presentation of plan information at the administering apparatus 11 for the communication navigation is executed mainly at the control device 111 and a computer program associated with the plan information at the navigation terminal 16 is executed mainly at the CPU 42. Especially, the data processing associated with the presentation of the plan information as described above is intended to be executed regularly or occasionally by an interrupt processing or the like as one portion of a main navigation program. Then, the computer program executed at the control device 111 may be stored in a built-in memory device such as a RAM or the like in the control device 111 or it may be downloaded through the transmitting / receiving device 118. On the other hand, the computer program executed at the CPU 42 may be stored in the ROM 43, the CD-ROM 53, or the DVD-ROM 54, or it may be downloaded through the communication device 58 to the RAM42, the hard disk unit 56, or the like.

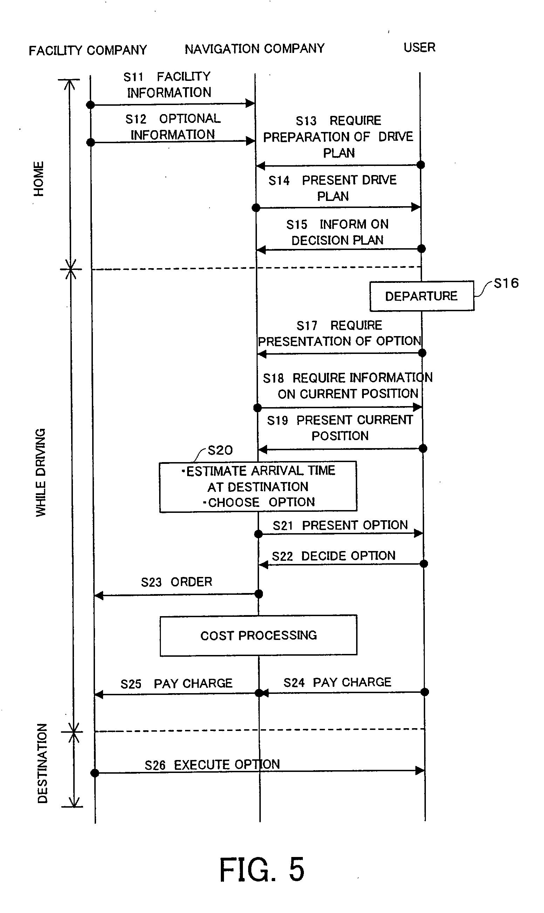

Next, the operational flow of the first embodiment will be explained with reference to a sequence chart in FIG. 5. The sequence chart shows each operation of the user, the facility company, and the navigation company as well as operations among them with time. The horizontal lines show their mutual relationship and the vertical lines, which direct up to down, show time elapsing. Incidentally, these flows are controlled mainly by executing the program of a self-contained or built-in computer system in the administering apparatus 11 for the communication navigation shown in FIG. 1.

In FIG. 5, the facility company registers in advance general information on the facility, i.e. if the facility company is a hotel, information on its address, telephone number, construction of guest rooms, guest room equipment, check in / out time, accommodation charge, traffic route, or the like at the navigation company (step S11). This information is used for plan searching by the navigation company when the user prepares the drive plan, and it is presented to the user as well.

Moreover, the facility company registers the optional information shown in FIG 4 in the optional information database 116, which the navigation company administrates with the contents corresponding to each time (step S12). Most of this information has such a character that it is planned just before providing the service or is suddenly finished, so that it is preferable that the facility company can make direct access to the administering apparatus 11 for the communication navigation to add, to change, and to delete the options on the optional information database 116.

Then, the user requires preparation of the drive plan from the user terminal 13 of the navigation company in order to prepare the drive plan (step S13). The navigation company presents the drive plan or plans to the user after searching the information stored in each database according to the conditions presented from the user (step S14). The user chooses his or her desirable plan from among the presented drive plans and informs the navigation company of its result (step S15). The step S13 to the step S15 are processes of preparing the drive plan, and it is assumed that the drive plan is usually prepared mainly at home by the day before driving.

The user departs according to the drive plan at a scheduled date (step S16). The user requires the presentation of the optional service of the navigation company as one example of added, changed or detailed plans according to the drive plan at a facility, a destination, or the like while driving (step S17). Sometimes, the user may encounter a traffic congestion or is required to change the driving route while driving, thereby arriving late at the destination. Even when arriving late because of the above reasons, however, it is possible to learn an available and preferable service from the arrival time. The communication device 58 of the navigation terminal 16 is used for communication between the navigation company and the user who is driving, and the input device 80 is used for inputting.

If the presentation of the optional service is required, the navigation company requires information on the current position of the vehicle of the user (step S18), and the user presents the current position to the navigation company (step S19). The current position is measured by the GPS receiver 38 or by the self-contained positioning apparatus 30 of the navigation terminal 16.

If it is such a system that the current position of the user's vehicle is informed to the navigation company automatically or at a regular interval, the step S17 may be omitted. In this kind of system, the navigation company can keep up with and understand the driving condition of the user every second, so that it is possible to present the optional service corresponding to the condition automatically even if the presentation of the optional service is not required from the user.

The administering apparatus 11 of the navigation company estimates or predicts the arrival time at the destination from the vehicle speed, the information on the current position, or the like presented from the user, searches the optional information database 116 for the optional service corresponding to the arrival time (step S20), and presents it to the user (step S21).

The user chooses what he or she desires among the presented optional service and informs the navigation company (step S22). When the order of the service is informed from the user, the navigation company contacts the facility company about it (step S23). The user pays the service charge with respect to the facility company and referral fee with respect to the navigation company as the cost (step S24). In this case, they are automatically withdrawn by the charging system 117 from the account or the accounts opened at the administering apparatus 11 for the communication navigation, and the service charge is automatically deposited to the account of the facility company, and the referral fee is automatically is deposited to the account of the navigation company (step S25). The administering apparatus 11 of the navigation company may be designed such that if the balance of the user's account is insufficient, it does not take the orders of the service or to take them after confirming that the user will pay it later. The step S17 to the step S25 are performed while driving and the user receives the optional service of the facility company when arriving at the destination (step S26).

### (II) Second Embodiment

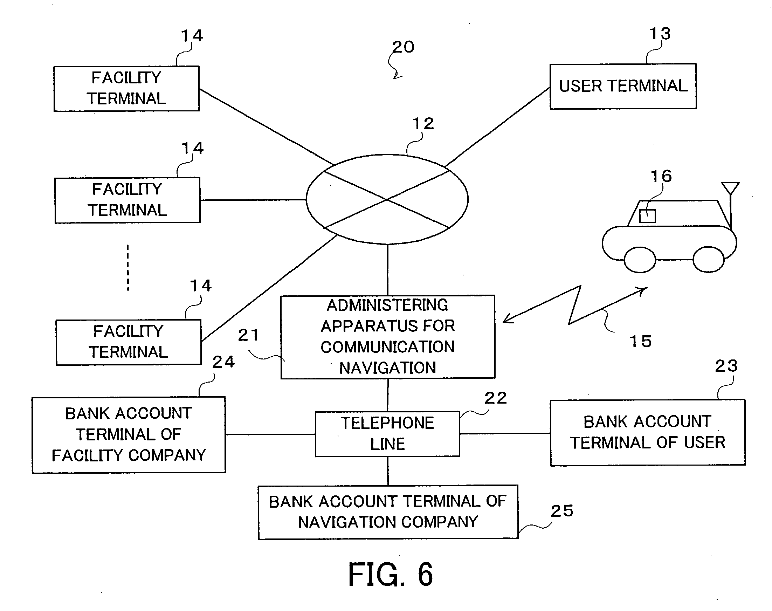

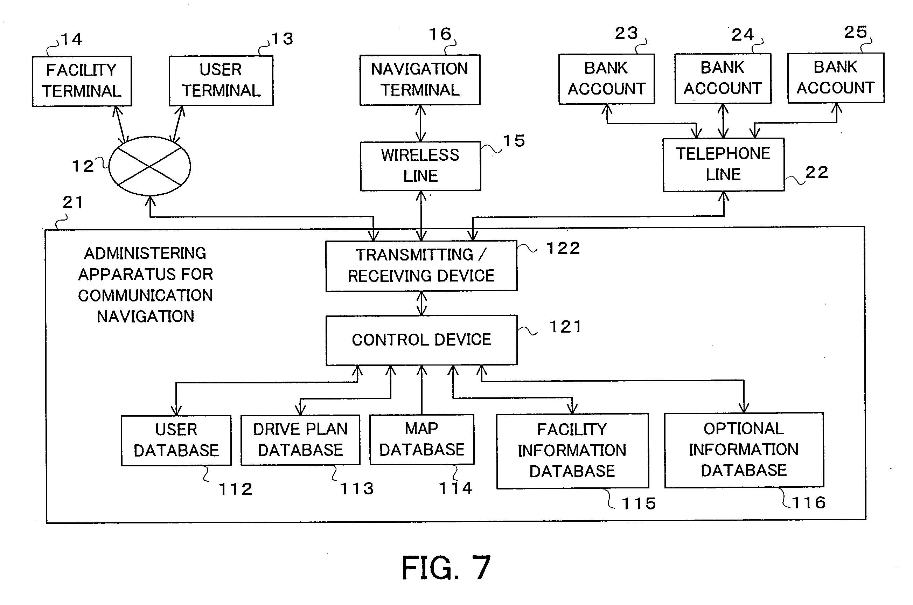

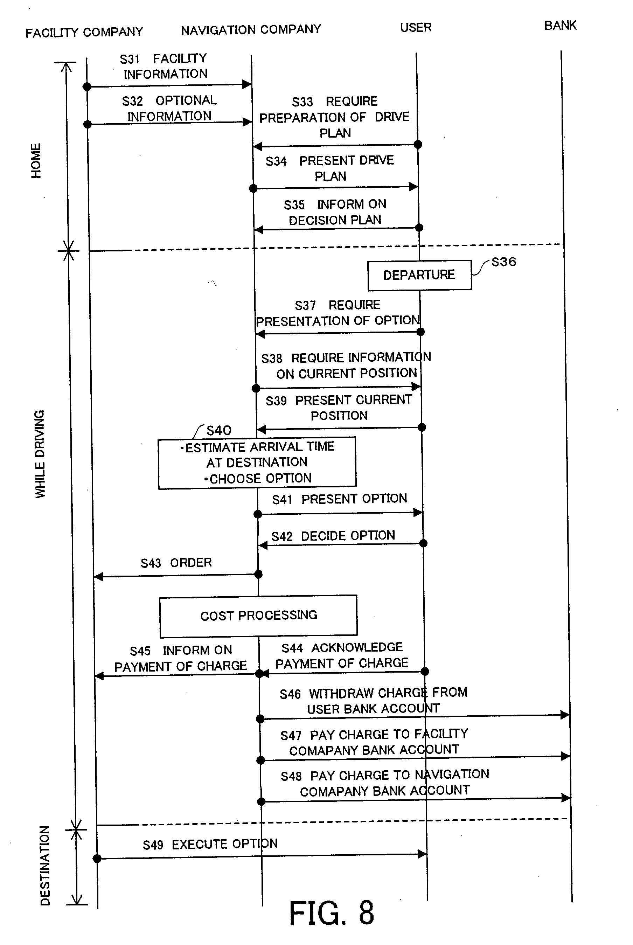

Next, a system for operating a communication navigation in the second embodiment will be explained with reference to FIG. 6 to FIG. 8. FIG. 6 is a block diagram showing the whole structure of a system for operating the communication navigation in the second embodiment. FIG. 7 is a block diagram showing a structure of an administering apparatus for the communication navigation, which is a constitutional element of the second embodiment. FIG. 8 is a sequence chart showing the operation of the second embodiment with time.

The second embodiment differs in a payment manner of the cost from the first embodiment. The same structure as that of the first embodiment and its operations are referred to the explanations of the first embodiment as the occasion demands, and the explanations about those in the second embodiment will be omitted.

As shown in FIG. 6, a system 20 for operating a communication navigation of the second embodiment is constructed by an administering apparatus 21 for the communication navigation, by the user terminal 13 and the facility terminals 14 connected to the administering apparatus 21 through the Internet network 12, by the navigation terminal 16 mounted on a vehicle connected to the administering apparatus 21 through the wireless line 15, and by a bank account terminal 23 of the user, a bank account terminal 24 of the facility company, and a bank account terminal 25 of the navigation company, the three of which are connected to the administering apparatus 21 through a telephone line 22.

The administering apparatus 21 for the communication navigation is intended to control the operation and the administration of the whole system. The operation, the administration, the installation or the like are performed by the navigation company, which operates the system 20. The navigation company uses the administering apparatus 21 for the communication navigation to provide services for the facility companies and the users who use the movable body, thereby deriving its income.

In the second embodiment, the Internet network 12, the user terminal 13, the facility terminal 14, the wireless line 15, and the navigation terminal 16 are the same as those explained in the first embodiment.

The telephone line 22 is intended to connect the administering apparatus 21 for the communication navigation to the bank account terminal 23 of the user, the bank account terminal 24 of the facility company, and the bank account terminal 25 of the navigation company, and it constitutes the system to perform payment processing of the charge. Obviously, other communication lines can be used instead of the telephone line 22.

Next, the structure of the administering apparatus 21 for the communication navigation will be explained with reference to FIG. 7.

As shown in FIG. 7, the administering apparatus 21 for the communication navigation is constructed by a control device 121 for controlling the system, the user database 112, the drive plan database 113, the map database 114, the facility information database 115, the optional information database 116, and a transmitting / receiving device 122. Obviously, more necessary structures may be added to this basis structure.

The control device 121 is intended to integrate each constitutional element of the administering apparatus 21 for the communication navigation and to control the system operation of the present invention, including the communication with banks, the facility companies, and the users through the transmitting / receiving device 122 to perform its control, for example. The computer system plays its core part.

Incidentally, the user database 112, the drive plan database 113, the map database 114, the facility information database 115, and the optional information database 116 are the same as those explained in the first embodiment.

The transmitting / receiving device 122 sends transmission information generated at the control device 121 to the user terminal 13, the facility terminal 14, the navigation terminal 16, and the bank account terminals 23, 24 and 25 while it receives information sent from the user terminal 13, the facility terminal 14, the navigation terminal 16, and the bank account terminals 23, 24 and 25 and transmits it to the control device 121. The transmission and reception of the transmitting / receiving device 122 to the user terminal 13 and the facility terminal 14 are performed through the Internet network 12, and those to the navigation terminal 16 are performed through the wireless line 15, and those to the bank account terminals 23, 24 and 25 are performed through the telephone line 22.

Next, an operational flow of the second embodiment will be explained with reference to a sequence chart in FIG. 8. The sequence chart shows each operation of the user, the facility company, the navigation company, and the bank as well as operations among them with time. The horizontal line shows their mutual relationship, and the vertical line, which directs up to down, shows time elapsing.

Incidentally, the optional information that the facility company presents is the same as that shown in FIG. 4. Moreover, these flows are controlled mainly by executing the program of a self-contained or built-in computer system in the administering apparatus 21 for the communication navigation shown in FIG. 6.

Firstly, in FIG. 8, the user, the navigation company, and the facility company open their individual accounts at a bank. This is performed to make a payment between the three through the bank accounts. If they have already had other accounts at the bank that they had contracted in advance, they can use them, of course.

In a step S31, the facility company registers the facility information into the facility information database 115 of the administering apparatus 21 for the communication navigation of the navigation company, before the navigation company informs the facility company of the order of the service that the user orders in a step S43. Then, the payment processing is performed. Each step between these steps is the same as that of the step S11 to the step S23 explained in the first embodiment, so that their explanations will be omitted here.

After the order is informed in the step S43, the user confirms an agreement on the payment of the costs with respect to the navigation company (step S44). Then, the navigation company informs the facility company of that agreement on the payment (step S45). After that, the navigation company accesses the bank account terminal 23 of the user through the telephone line 22 and withdraws the brokerage commission, which will be received by the navigation company, and service charge for the service, which will be received by the user at the destination, from the user's account (step S46). The navigation company deposits the service charge into the bank account terminal 24 of the facility company (step S47) and deposits the brokerage commission into the bank account terminal 25 of the navigation company (step S48). The system may be designed such that if the balance of the user's account is insufficient, it does not take the orders of the service or to take them after confirming that the user will pay it later.

The step S37 to the step S48 are performed while driving, and the user receives the optional service of the facility company when arriving at the destination (step S49).

Incidentally, in each embodiment described above, typical navigation operations such as displaying a map of vicinity of the current position, displaying the current position on the map, searching for a route to a destination, a route guidance, or the like may be designed to be performed at least partially on the side of the administering apparatus 11 or the administering apparatus 21 for the communication navigation by using the map database 114 or the like in the same manner as the processing associated with the plan information constituting the drive plans described above. Alternatively, the typical navigation operations described above may be performed on the side of the navigation terminal 16 for the vehicle by using the map data or the like stored in the CD-ROM 53 or the DVD-ROM 54 aside from the processing associated with the plan information constituting the drive plans described above.

Moreover, the navigation terminal 16 of the present invention can be applied not only to one for a vehicle as described in each embodiment above but also to various ones for various movable bodies such as an airplane, a ship, a bicycle, or the like and further to one for a pedestrian, an animal or the like who use a cellar phone, a portable or hand-carry type information terminal, or the like.

## Claims

1. A system (10, 20) for operating a communication navigation **characterized in that** said system comprises a movable body navigation terminal (16) for a user and an administering apparatus (11, 21) for a communication navigation company, which are connected to each other through a communication line (12, 15, 22), said movable body navigation terminal being mounted on a movable body, wherein
said administering apparatus provides, to said movable body navigation terminal, plan information which indicates an added, changed or detailed plan in line with a drive plan set at said movable body navigation terminal and which corresponds to an in-progress state of the drive plan based on a driving condition of the movable body detected at said movable body navigation terminal, and
said administering apparatus collects a predetermined amount of fee in case that said movable body navigation terminal adopts the provided plan information.

2. The system (10, 20) according to claim 1, **characterized in that**
a facility terminal (14) installed at a facility associated with the added, changed or detailed plan is further connected to said administering apparatus (11, 21) through the communication line (12, 15, 22), and
said facility terminal transmits the plan information to said administering apparatus through the communication line in advance.

3. The system (10, 20) according to claim 1 or 2, **characterized in that**
a facility terminal (14) installed at a facility associated with the added, changed or detailed plan is further connected to said administering apparatus (11, 21) through the communication line (12, 15, 22), and
said administering apparatus transmits a scheduled arrival time of the movable body arriving at a destination of the drive plan, which is based on a current time and a current position of the movable body detected at said movable body navigation terminal (16), to said facility terminal through the communication line.

4. The system (10, 20) according to any one of claims 1 to 3, **characterized in that** said administering apparatus (11, 21) comprises an arrival time calculation device (111) for calculating an arrival time of the movable body arriving at a destination of the drive plan on the basis of (i) a current time and a current position of the movable body detected at said navigation terminal (16) and (ii) the drive plan.

5. The system (10, 20) according to any one of claims 1 to 4, **characterized in that**
an information terminal (13), which is different from said movable body navigation terminal (16), is further connected to said administering apparatus (11, 21) through the communication line (12, 15, 22), and
said administering apparatus prepares the drive plan corresponding to a driving condition transmitted through the communication line from said information terminal.

6. The system (10, 20) according to claim 5, **characterized in that**
said administering apparatus (11, 21) transmits the plan information indicating the drive plan to said movable body navigation terminal (16) through the communication line (12, 15, 22), and
the plan information received through the communication line is set at said movable body navigation terminal.

7. The system (10, 20) according to any one of claims 1 to 6, **characterized in that** said administering apparatus (11, 21) provides the plan information corresponding to a scheduled arrival time of the movable body arriving at a destination of the drive plan, which is based on a current time and a current position of the movable body detected at said movable body navigation terminal (16), as the in-progress state of the drive plan.

8. The system (10, 20) according to any one of claims 1 to 7, **characterized in that** said administering apparatus (11, 21) comprises: a database (113) for storing a plurality of plan information; and a searching device (111) for searching the database for the plan information corresponding to the in-progress state of the drive plan.

9. The system (10, 20) according to any one of claims 1 to 8, **characterized in that** said movable body navigation terminal (16) comprises: a storing device (56) for storing the plan information indicating the added, changed or detailed plan as well as the plan information indicating the drive plan received from said administering apparatus (11, 21); an output device (60, 70) for outputting the stored plan information in a predetermined format; and an input device (80) through which adoption information indicative of adopting the outputted plan information can be inputted.

10. The system (10) according to any one of claims 1 to 9, **characterized in that** said administering apparatus (11) comprises a charging device (117) for performing a payment process corresponding to a collection of the predetermined amount of fee by withdrawing a predetermined amount of money from the amount of money which has been paid to said administering apparatus by the user in advance.

11. The system (20) according to any one of claims 1 to 10, **characterized in that** said administering apparatus (21) is connected to a bank terminal (23, 24, 25) through the communication line (12, 15, 22) and performs a payment process corresponding to a collection of the predetermined amount of fee by withdrawing a predetermined amount of money from a bank account of the user at said bank terminal.

12. A computer program of instructions **characterized in that** said computer program of instructions cause a computer, which is in a system (10, 20) for operating a communication navigation comprising a movable body navigation terminal (16) for a user and an administering apparatus (11, 21) for a communication navigation company connected to each other through a communication line (12, 15, 22), to function as said administering apparatus, said movable body navigation terminal being mounted on a movable body, wherein
said administering apparatus provides, to said movable body navigation terminal, plan information which indicates an added, changed or detailed plan in line with a drive plan set at said movable body navigation terminal and which corresponds to an in-progress state of the drive plan based on a driving condition of the movable body detected at said movable body navigation terminal, and
said administering apparatus collects a predetermined amount of fee in case that said movable body navigation terminal adopts the provided plan information.

13. A computer program of instructions **characterized in that** said computer program of instructions cause a computer, which is in a system (10, 20) for operating a communication navigation comprising a movable body navigation terminal (16) for a user and an administering apparatus (11, 21) for a communication navigation company connected to each other through a communication line (12, 15, 22), to function as said movable body navigation terminal, said movable body navigation terminal being mounted on a movable body, wherein
said administering apparatus provides, to said movable body navigation terminal, plan information which indicates an added, changed or detailed plan in line with a drive plan set at said movable body navigation terminal and which corresponds to an in-progress state of the drive plan based on a driving condition of the movable body detected at said movable body navigation terminal, and
said administering apparatus collects a predetermined amount of fee in case that said movable body navigation terminal adopts the provided plan information.

14. A method of operating a communication navigation in a system (10, 20) for operating the communication navigation comprising a movable body navigation terminal (16) for a user and an administering apparatus (11, 21) for a communication navigation company, which are connected to each other through a communication line (12, 15, 22), said movable body navigation terminal being mounted on a movable body, **characterized in that** said method comprises the processes of:
providing, from said administrating apparatus to said movable body navigation terminal, plan information which indicates an added, changed or detailed plan in line with a drive plan set at said movable body navigation terminal and which corresponds to an in-progress state of the drive plan based on a driving condition of the movable body detected at said movable body navigation terminal, and
collecting a predetermined amount of fee in case that said movable body navigation terminal adopts the provided plan information.

15. The method according to claim 14, **characterized in that**
a facility terminal (14) installed at a facility associated with the added, changed or detailed plan is further connected to said administering apparatus (11, 21) through the communication line (12, 15, 22), and
said method further comprises the process of transmitting a scheduled arrival time of the movable body arriving at a destination of the drive plan, which is based on a current time and a current position of the movable body detected at said movable body navigation terminal, from said administrating apparatus to said facility terminal through the communication line.

16. The method according to claim 14 or 15, **characterized in that**
an information terminal (13), which is different from said movable body navigation terminal, is further connected to said administering apparatus (11, 21) through the communication line (12, 15, 22), and
said method further comprises a process of preparing the drive plan corresponding to a driving condition transmitted through the communication line from said information terminal, by said administering apparatus.

17. The method according to any one of claims 14 to 16, **characterized in that** said method further comprises a process of performing a payment process corresponding to a collection of the predetermined amount of fee by withdrawing a predetermined amount of money from the amount of money which has been paid to said administering apparatus (11) by the user in advance, by said administering apparatus.

18. The method according to any one of claims 14 to 16, **characterized in that**
said administering apparatus (21) is connected to a bank terminal (23, 24, 25) through the communication line (12, 15, 22), and
said method further comprises a process of performing a payment process corresponding to a collection of the predetermined amount of fee by withdrawing a predetermined amount of money from a bank account of the user at said bank terminal.

19. A system (10, 20) for operating a communication navigation comprising a movable body navigation terminal (16) for a user and an administering apparatus (11, 21) for a communication navigation company, which are connected to each other through a communication line (12, 15, 22), said movable body navigation terminal being mounted on a movable body, **characterized in that**
said administering apparatus provides, to said movable body navigation terminal, plan information which indicates an added, changed or detailed plan in line with a drive plan set at said movable body navigation terminal and which corresponds to an in-progress state of the drive plan based on a driving condition of the movable body detected at said movable body navigation terminal.

20. The system (10, 20) according to claim 21, **characterized in that** said administering apparatus (11, 21) provides the plan information corresponding to a scheduled arrival time of the movable body arriving at a destination of the drive plan, which is based on a current time and a current position of the movable body detected at said movable body navigation terminal, as the in-progress state of the drive plan.

21. A method of operating a communication navigation in a system (10, 20) for operating the communication navigation comprising a movable body navigation terminal (16) for a user and an administering apparatus (11, 21) for a communication navigation company, which are connected to each other through a communication line (12, 15, 22), said movable body navigation terminal being mounted on a movable body, **characterized in that** said method comprises the process of:
providing, from said administrating apparatus to said movable body navigation terminal, plan information which indicates an added, changed or detailed plan in line with a drive plan set at said movable body navigation terminal and which corresponds to an in-progress state of the drive plan based on a driving condition of the movable body detected at said movable body navigation terminal.

22. The method according to claim 21, **characterized in that** said administering apparatus (11, 21) provides the plan information corresponding to a scheduled arrival time of the movable body arriving at a destination of the drive plan, which is based on a current time and a current position of the movable body detected at said movable body navigation terminal (16), as the in-progress state of the drive plan.
